# DEMANDE DE BREVET EUROPEEN

(11) **EP 2 062 859 A1**
(43) Date de publication de la demande: **27.05.2009**
(21) Numéro de dépôt: 08290910.2
(22) Date de dépôt: 26.09.2008
(51) Int. Cl.: C02F 11/00, C05F 3/00

(54) **Procédé et installation de transformation de boues fermentescibles**

(30) Priorité: 26.09.2007 FR 0706746
(71) Demandeur: Vauche S.A., 08200 Sedan (FR)
(72) Inventeur: Vauche, Stéphane, 08200 Floing (FR); Blusztejn, Marc, 78111 Dammartin en Sevre (FR)
(74) Mandataire: Debay, Yves

(57) **Abrégé**

La présente invention concerne une installation de transformation de boues fermentescibles constitué d'un mélangeur à soc rapide permettant le passage d'un mélange de boues fermentescibles et de chaux, les proportions de mélanges étant contrôlées par un système de contrôle et de mesure, le premier mélangeur étant en sortie relié par un système de transport étanche avec au moins une seconde enceinte confinée constituant un mélangeur évaporateur à soc lent dans lequel l'ensemble du produit mélangé est recueilli, conservé pendant 2 à 3 heures à une température de 70°C à 90°C, dans la seconde enceinte, le(s) mélangeur(s) évaporateur(s) à soc lent étant relié(s) à un système d'évacuation des gaz permettant le traitement des vapeurs d'ammoniaque. L'installation permet le traitement de boues en grande quantité sans nécessiter un apport d'énergie complémentaire. L'invention propose également un procédé de transformation de boues fermentescibles et un produit résultant de cette transformation par utilisation du procédé et de l'installation.

## Description

La présente invention concerne l'installation de traitement de boues et notamment de boues industrielles contenant une fraction fermentescible et un taux de matière sèche compris entre 16% et 25%.

Il est connu par le brevet européen EP 524 245 un procédé et appareil pour la réduction des pathogènes dans les boues.

L'appareil permettant la mise en oeuvre du procédé est constitué d'un système à vis sans fin alimenté en entrée par les boues et un additif choisi dans le groupe constitué d'oxyde de calcium et de carbonate de calcium, ce mélangeur à vis sans fin ayant une longueur importante pour maintenir l'ensemble du mélange pendant au moins 2 heures dans son enceinte avec un PH prédéterminé d'environ 12 et une température maintenue éventuellement par un apport complémentaire de chaleur à une valeur de l'ordre de 70°C. Ce dispositif ne permet de maintenir la température de 70°C que pendant 30 minutes et si l'on souhaite maintenir cette température plus longtemps, il est nécessaire comme cela est indiqué dans la description de prévoir un apport de chaleur complémentaire.

Pour ce faire, il est donc nécessaire d'enrouler des éléments de chauffage autour du transporteur tubulaire à vis et prévoir, autour de ces éléments de chauffage, une isolation. Une telle installation est par conséquent relativement onéreuse et par ailleurs présente l'inconvénient de ne pouvoir traiter de grandes quantités puisque le temps de stagnation nécessaire du mélange dans l'appareil est de 2 heures et son volume, compte-tenu de la nécessité d'assurer à la fois la fonction mélange et la fonction transfert, ne peut être augmenté indéfiniment.

Un des buts de la présente invention est donc de permettre le traitement de boues en grande quantité sans nécessiter un apport d'énergie complémentaire.

Ce but est atteint par une installation de transformation de boues fermentescibles stockées dans au moins un premier silo de stockage et transportées par un premier moyen de transport vers au moins une première enceinte confinée, **caractérisée en ce que** l'installation de transformation comprend :
- au moins un premier type de mélangeur à soc formé par la première enceinte confinée dont la vitesse de rotation est déterminée pour permettre le passage dans le mélangeur, d'un mélange de boues fermentescibles provenant d'au moins un premier silo de stockage,
- au moins un second silo de stockage pour chaux relié par un second moyen de transport au premier type de mélangeur à soc,
- une vanne d'alimentation du premier type de mélangeur à soc en eau industrielle ou en eau chargée en déchets organiques solides,
- un système de contrôle et de mesure actionnant les moyens de transport et d'alimentation des produits et mesurant les caractéristiques physiques ou chimiques des produits transportés pour adapter les proportions en boues, en chaux et en eaux introduites dans le premier type de mélangeur de sorte que le taux d'humidité du mélange soit maintenu à un seuil souhaité et que le PH soit maintenu dans une plage de valeur comprise entre 8 et 12,
- une sortie du premier type de mélangeur reliée par un système de transport étanche qui se déverse dans au moins une seconde enceinte confinée qui intègre au moins un second type de mélangeur, dit mélangeur évaporateur à soc plus lent que le premier type de mélangeur et dont les capacités de stockage sont arrangées pour que la masse de mélange recueilli soit suffisante pour un maintien naturel de la température du mélange dans une plage de température souhaitée,
- au moins une sortie du mélangeur évaporateur est reliée par un transporteur à un tambour de criblage dont un produit final stabilisé sort pour être acheminé par un deuxième transporteur vers une zone de stockage et de maturation.

Selon une particularité de l'invention, l'installation de transformation de boues fermentescibles est **caractérisée en ce que** le mélangeur évaporateur comprend au moins une sortie reliée de façon étanche à un système d'évacuation des gaz associée à une unité de traitement des vapeurs d'ammoniaque évacuées.

Selon une autre particularité de l'invention, l'installation de transformation de boues fermentescibles est **caractérisée en ce que** l'installation de transformation comprend un broyeur alimenté en copeaux de bois ou de matériau ligneux ou de produits fragmentés à haut pouvoir calorifique et relié par un système de transport à l'alimentation d'au moins un premier type de mélangeur.

Selon une autre particularité de l'invention, l'installation de transformation de boues fermentescibles est **caractérisé en ce que** le système de transport étanche qui assure le transport de matière entre au moins un premier type de mélangeur et au moins un mélangeur évaporateur est constitué d'un système de transport à vis assurant une étanchéité au gaz d'ammoniaque qui se dégage dans l'enceinte confinée d'au moins un mélangeur évaporateur, et en ce que au moins un transporteur qui alimente le premier type de mélangeur (31, 32) depuis au moins un silo de stockage de boues et/ou au moins un silo de stockage de chaux est également un transporteur à vis.

Selon une autre particularité de l'invention, l'installation de transformation de boues fermentescibles est **caractérisé en ce que** les enceintes du mélangeur évaporateur ont une capacité adaptée pour contenir 30 tonnes de mélanges

Un autre objectif est de proposer un procédé de transformation de boues fermentescibles.

Cet objectif est atteint grâce à un procédé de transformation de boues fermentescibles selon l'invention, **caractérisé en ce que** le procédé comprend au moins :
- une étape de mélange de boues avec de la chaux jusqu'à obtention d'un mélange à PH homogène compris dans une plage de 8 à 12,
- une étape de malaxage du mélange afin de permettre au moins une réaction chimique entre différents composants du mélange,
- une conservation du mélange à une température comprise entre 70°C et 90°C et maintenue naturellement grâce à au moins une réaction chimique exothermique du mélange,
- une étape de criblage du produit issu du mélange malaxé,
- un acheminement du produit criblé vers une zone de stockage,
- une étape de traitement d'au moins une évaporation d'ammoniaque
- une étape de maturation pendant un période déterminé jusqu'à obtention d'un produit avec un taux d'humidité compris entre 2% et 35% et un taux de matière sèche compris entre 65% et 98%.

Selon une autre particularité de l'invention, le procédé de l'invention est **caractérisé en ce que** l'étape de mélange de boues avec de la chaux s'effectue concomitamment à un rajout d'une matière à haut pouvoir calorifique dans une proportion déterminée pour obtenir un produit final ayant un pouvoir calorifique inférieur (PCI) de l'ordre de 2000 kJ/kg.

Selon une autre particularité de l'invention, le procédé de l'invention est **caractérisé en ce que** les boues utilisées présentent une granulométrie hétérogène comprise entre 10 et 80 millimètres.

Un autre but est de proposer un produit résultant de cette transformation.

Ce but est atteint par un produit obtenu par utilisation du procédé et de l'installation caractérisé par une granulométrie comprise entre 10 et 30 millimètres et un pouvoir d'enrichissement des sols.

Selon une autre caractéristique, le produit obtenu par le procédé et l'installation est caractérisé par une granulométrie de l'ordre de 50 à 80 millimètres et un haut pouvoir calorifique inférieur de l'ordre de 2000 kJ/kg.

D'autres particularités et avantages de l'invention apparaîtront plus clairement à la lecture de la description ci-après faisant référence aux dessins annexés dans lesquels :
- la figure 1 représente une vue de dessus de l'installation ;
- la figure 2 représente une vue schématique des étapes du procédé.

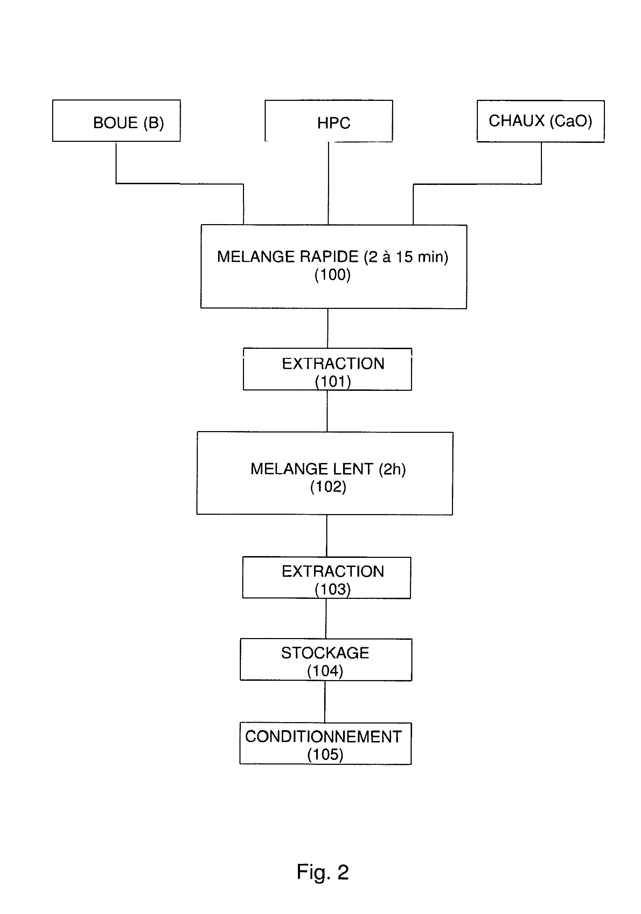

En référence à la figure 2, une première étape du procédé consiste à mélanger rapidement (100) de la boue (B) avec de la chaux (CaO). Dans le cadre de la production de combustible, la boue (B), de la chaux (CaO) et une matière à haut pouvoir calorifique (HPC) sont mélangées. Ce procédé consiste ensuite à extraire (101) ce mélange pour l'introduire dans une enceinte de plus grande capacité effectuant un mélange lent (102) pendant 2 heures. Au bout de 2 heures, le mélange est extrait (103) pour le stocker (104) dans une zone de stockage et de maturation. Enfin le produit est conditionné (105) pour l'expédier au client.

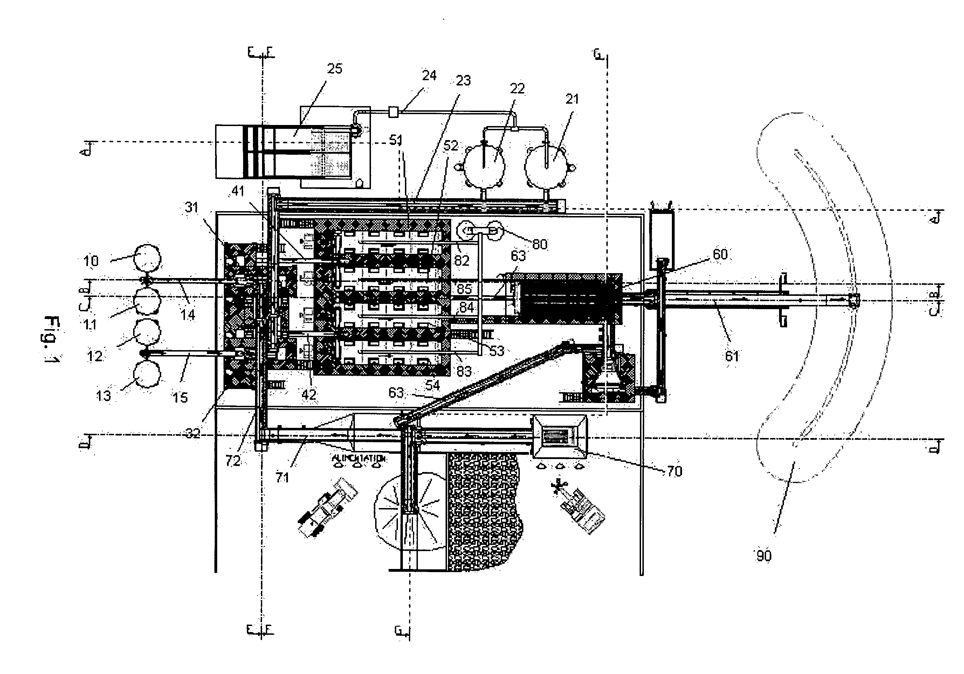

Comme on peut le voir sur la figure 1, l'installation permettant la mise en oeuvre du procédé comporte une cuve (25) de réception des boues, laquelle alimente par une tuyauterie (24), par exemple, deux silos de stockage (21, 22) des boues. Ces silos de stockage (21, 22) alimentent, par le bas, un premier système de transport (23) à vis transportant les boues de la partie basse vers l'entrée élevée d'au moins un mélangeur rapide (31, 32). L'entrée supérieure des mélangeurs rapides (31, 32) accueille également l'extrémité de transporteurs à vis (14, 15) amenant de la chaux vive stockée dans au moins un silo (10, 11, 12, 13). Ces mélangeurs rapides (31, 32) mélangent de l'ordre de ¼ de tonne de mélange par minute.

L'entrée supérieure des mélangeurs rapides (31, 32) reçoit également l'extrémité des systèmes de transport (71, 72) à vis reliant ainsi l'extrémité inférieure d'un broyeur (70) à l'extrémité supérieure des mélangeurs rapides (31, 32). Le broyeur (70) permet de broyer des copeaux de bois ou des produits à haut pouvoir calorifique tels que des matériaux ligneux ou des produits fragmentés par exemple matières plastiques, permettant d'élever le pouvoir calorifique inférieur (PCI) du produit mélangé de 1500 à 2000 kJ/kg. Le broyeur (70) permet d'obtenir une granulométrie de l'ordre de 50 à 80 millimètres. Un ensemble de capteurs disposé sur les différents systèmes d'alimentation permet de mesurer les composantes physico-chimiques de chacun des produits constituant le mélange et de réguler par la commande d'actionneurs ou de vannes le taux de matière sèche, l'humidité et le PH. Le PH est maintenu grâce à ce système de régulation dans une plage de 8 à 12. Les mélangeurs rapides (31, 32) tournent à une vitesse permettant d'effectuer le mélange des produits introduits pendant quelques minutes (2 à 15 minutes) puis le produit mélangé est extrait par une vis transporteuse (41, 42) de la base de chaque mélangeur à vis pour être amené vers un deuxième ensemble d'enceintes confinées (51, 52, 53, 54) constituant des mélangeurs à soc lent. Ces deuxièmes enceintes (51, 52, 53, 54) d'une capacité plus importante que les premières permettent de contenir, dans l'exemple de réalisation représenté, une quantité de 30 tonnes de produits mélangés pendant 2 heures. Chaque enceinte (51, 52, 53, 54) contenant plusieurs tonnes de produits génère naturellement par la réaction chimique exothermique une quantité de chaleur suffisante pour que le mélange soit maintenu naturellement à une température comprise entre 70 et 90°C. L'ensemble du mélange est malaxé par un soc lent et des canalisations (82, 83, 84, 85) extraient de la partie supérieure de chaque enceinte (51, 52, 53, 54) les gaz émis par la réaction physico-chimique. Ces gaz sont ensuite traités par une unité de traitement d'ammoniaque (80). Le produit se présentant à la sortie des mélangeurs à soc lent est ensuite acheminé par une vis transporteuse (63) vers un tambour de criblage (60), lequel permet de calibrer la granulométrie du produit résultant. Le produit résultant sortant du tambour (60) est ensuite acheminé par un transporteur à bande (61) vers une zone de stockage (90) à l'air libre permettant de stocker le produit stabilisé sur une période de 2 à 12 semaines pour permettre sa maturation. Le produit final ainsi valorisé peut être utilisé soit sur le plan agricole pour enrichir les sols ou valorisé en combustible dans le cas de l'addition de produits à haut pouvoir calorifique.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Installation de transformation de boues fermentescibles stockées dans au moins un premier silo de stockage (21, 22) et transportées par un premier moyen de transport (23) vers au moins une première enceinte confinée, **caractérisée en ce que** l'installation de transformation comprend :
- au moins un premier type de mélangeur à soc (31, 32) formé par la première enceinte confinée dont la vitesse de rotation est déterminée pour permettre le passage dans le mélangeur, d'un mélange de boues fermentescibles provenant d'au moins un premier silo de stockage (21, 22)
- au moins un second silo de stockage pour chaux (10, 11, 12, 13) relié par un second moyen de transport (14, 15) au premier type de mélangeur à soc (31, 32),
- une vanne d'alimentation du premier type de mélangeur à soc (31, 32) en eau industrielle ou en eau chargée en déchets organiques solides,
- un système de contrôle et de mesure actionnant les moyens de transport (23, 14, 15) et d'alimentation des produits et mesurant les caractéristiques physiques ou chimiques des produits transportés pour adapter les proportions en boues, en chaux et en eaux introduites dans le premier type de mélangeur (31, 32) de sorte que le taux d'humidité du mélange soit maintenu à un seuil souhaité et que le PH soit maintenu dans une plage de valeur comprise entre 8 et 12,
- une sortie du premier type de mélangeur (31, 32) reliée par un système de transport étanche (41, 42) qui se déverse dans au moins une seconde enceinte confinée (51, 52, 53, 54) qui intègre au moins un second type de mélangeur, dit mélangeur évaporateur (82, 83, 84, 85), à soc plus lent que le premier type de mélangeur et dont les capacités de stockage sont arrangées pour que la masse de mélange recueilli soit suffisante pour un maintien naturel de la température du mélange dans une plage de température souhaitée,
- au moins une sortie du mélangeur évaporateur (82, 83, 84, 85) est reliée par un transporteur (63) à un tambour de criblage (60) dont un produit final stabilisé sort pour être acheminé par un deuxième transporteur (61) vers une zone de stockage et de maturation (90).

2. Installation de transformation de boues fermentescibles selon la revendication 1, **caractérisé en ce que** le mélangeur évaporateur (82, 83, 84, 85) comprend au moins une sortie reliée de façon étanche à un système d'évacuation des gaz associée à une unité de traitement (80) des vapeurs d'ammoniaque évacuées.

3. Installation de transformation de boues fermentescibles selon une des revendications précédentes, **caractérisé en ce que** l'installation de transformation comprend un broyeur (70) alimenté en copeaux de bois ou de matériau ligneux ou de produits fragmentés à haut pouvoir calorifique et relié par un système de transport (71, 72) à l'alimentation d'au moins un premier type de mélangeur (31, 32).

4. Installation de transformation de boues fermentescibles selon une des revendications précédentes, **caractérisé en ce que** le système de transport étanche (41, 42) qui assure le transport de matière entre au moins un premier type de mélangeur (31, 32) et au moins un mélangeur évaporateur (51, 52, 53, 54) est constitué d'un système de transport à vis assurant une étanchéité au gaz d'ammoniaque qui se dégage dans l'enceinte confinée d'au moins un mélangeur évaporateur (51, 52, 53, 54), et **en ce que** au moins un transporteur (23, 14, 15) qui alimente le premier type de mélangeur (31, 32) depuis au moins un silo de stockage de boues (21, 22) et/ou au moins un silo de stockage de chaux (10, 11, 12, 13) est également un transporteur à vis.

5. Installation de transformation de boues fermentescibles selon une des revendications précédentes, **caractérisé en ce que** les enceintes du mélangeur évaporateur ont une capacité adaptée pour contenir 30 tonnes de mélanges

6. Procédé de transformation de boues fermentescibles mis en oeuvre par l'installation selon une des revendications 1 à 5, **caractérisé en ce que** le procédé comprend au moins :
- une étape de mélange de boues avec de la chaux jusqu'à obtention d'un mélange à PH homogène compris dans une plage de 8 à 12,
- une étape de malaxage du mélange afin de permettre au moins une réaction chimique entre différents composants du mélange,
- une conservation du mélange à une température comprise entre 70°C et 90°C et maintenue naturellement grâce à au moins une réaction chimique exothermique du mélange,
- une étape de criblage du produit issu du mélange malaxé,
- un acheminement du produit criblé vers une zone de stockage,
- une étape de traitement d'au moins une évaporation d'ammoniaque
- une étape de maturation pendant un période déterminé jusqu'à obtention d'un produit avec un taux d'humidité compris entre 2% et 35% et un taux de matière sèche compris entre 65% et 98%.

7. Procédé de transformation de boues fermentescibles selon la revendication précédente, **caractérisé en ce que** l'étape de mélange de boues avec de la chaux s'effectue concomitamment à un rajout d'une matière à haut pouvoir calorifique dans une proportion déterminée pour obtenir un produit final ayant un pouvoir calorifique inférieur (PCI) de l'ordre de 2000 kJ/kg.

8. Procédé de transformation de boues fermentescibles selon la revendication précédente, **caractérisé en ce que** les boues utilisées présentent une granulométrie hétérogène comprise entre 10 et 80 millimètres.

9. Produit obtenu par utilisation du procédé selon une des revendications 6 à 8 **caractérisé par** une granulométrie comprise entre 10 et 30 millimètres et un pouvoir d'enrichissement des sols.

10. Produit calorifique obtenu par le procédé et l'installation selon une des revendications 6 à 8, **caractérisé par** une granulométrie de l'ordre de 50 à 80 millimètres et un haut pouvoir calorifique inférieur de l'ordre de 2000 kJ/kg.
